# FASCICULE DE BREVET EUROPEEN

(11) **EP 1 584 079 B1**
(45) Date de publication et mention de la délivrance du brevet: **03.04.2019**
(21) Numéro de dépôt: 03755590.1
(22) Date de dépôt: 11.07.2003
(51) Int. Cl.: G08G 1/04

(54) **PROCEDE DE DETECTION D'INCIDENT SUR ROUTE**
VERFAHREN ZUR UNFALLERKENNUNG AUF EINER STRASSE
DEVICE FOR DETECTING AN INCIDENT OR THE LIKE ON A TRAFFIC LANE PORTION

(30) Priorité: 22.07.2002 FR 0209251
(43) Date de publication de la demande: 12.10.2005
(73) Titulaire: Citilog, 94110 Arcueil (FR)
(72) Inventeur: BOUZAR, Salah, F- 92330 Sceaux (FR)
(74) Mandataire: Bell, Mark
(86) Numéro de dépôt international: PCT/FR2003/002188
(87) Numéro de publication internationale: WO 2004/012168

(56) Documents cités:
- EP-A2- 0 913 799
- WO-A-01/33503
- WO-A-95/16213
- WO-A-96/22588
- FR-A- 2 785 432
- US-A- 4 847 772
- US-A- 5 396 283
- US-A1- 2002 054 210
- US-B1- 6 727 938

## Description

La présente invention concerne les procédés pour détecter les changements de l'état d'occupation d'une portion de voie apte à être parcourue par des objets suivant son axe située dans un paysage donné, par exemple pour évaluer les variations de la densité du trafic sur cette portion de voie, procédés qui trouvent une application particulièrement avantageuse dans le domaine de la détection d'incidents de toute nature qui peuvent se produirent sur cette portion de voie.

Le trafic, notamment de véhicules automobiles, ne cesse d'augmenter depuis plusieurs années et, dans certaines circonstances, par exemple suite à des incidents sur les voies empruntées par ces véhicules, il se produit des engorgements nuisant incontestablement à la circulation. Il a donc été pensé qu'il pourrait être remédié à ces inconvénients en détectant tout incident survenant sur une portion de voie, le plus rapidement possible après qu'il se soit produit, puis en contrôlant et modulant la circulation des véhicules sur cette portion de voie, que cette portion de voie soit fortement parcourue par des véhicules (voie dite circulée) ou faiblement fréquentée par les véhicules (une bande d'arrêt d'urgence, zone à zébra, refuge, etc.).

Pour pouvoir détecter de tels incidents, il a été nécessaire de réaliser des capteurs pouvant donner une image de la circulation des véhicules sur une portion de voie. De nombreux capteurs ont été mis au point. Il a par exemple été élaboré un capteur comportant des récepteurs photosensibles associés à des rayons lumineux dirigés vers les voies parcourues par les véhicules et renvoyés par des surfaces réfléchissantes disposées à cet effet sur les chaussées, ces récepteurs photosensibles délivrant à leurs sorties des signaux chaque fois qu'un véhicule coupe les faisceaux lumineux.

Cette technique donne de bons résultats. Mais les signaux délivrés ne sont représentatifs que du trafic en un point déterminé et les capteurs utilisés ne sont pas d'une utilisation souple car ils nécessitent de fixer des éléments sur la chaussée, à des emplacements bien définis et de s'assurer de la réflexion permanente de ces surfaces réfléchissantes par l'ajout d'un éclairage artificiel lorsque l'éclairement de la scène est faible. Ces éléments ne peuvent donc être déplacés sans problèmes et, lorsqu'ils sont mis en place, ils imposent des interventions fréquentes, ne serait-ce que pour le nettoyage de leurs surfaces réfléchissantes.

D'autres capteurs ont été réalisés pour augmenter la surface de surveillance. Tel est le cas d'un capteur constitué par une boucle magnétique noyée dans la chaussée. Ce capteur permet de pallier une partie des inconvénients mentionnés ci-avant mais son utilité reste encore trop ponctuelle, par le fait-même qu'il reste lié à un endroit déterminé de la chaussée et nécessite de gros travaux d'installation par sciage de la chaussée.

Il a également été mis au point un dispositif pour la mise en oeuvre du procédé décrit dans le EP-A-0 277 050. Selon ce procédé, il est tout d'abord formé une image réelle principale de la portion de voie, dans un plan formant un angle non nul avec celui de cette portion de voie. Cette image principale est ensuite décomposée en une pluralité de points et on détermine la relation entre la dimension d'une longueur unitaire prise sensiblement au niveau de la portion de voie et la dimension de son image formée dans l'image principale, en fonction du nombre de points recouverts par l'image et de l'emplacement de la longueur unitaire sur la portion de voie. Il est en outre déterminé une image secondaire dans l'image principale, cette image secondaire correspondant à un repère longitudinal lié au véhicule se trouvant sur la portion de voie, les différentes positions successives de l'image secondaire étant définies par corrélation du nombre de points recouverts par cette image secondaire, sachant que cette image secondaire correspond, suivant ladite relation, à une longueur constante au niveau de la portion de voie.

Le dispositif décrit dans ce document antérieur donne de très bons résultats et permet de déterminer un très grand nombre de paramètres définissant la densité du trafic sur une portion de voie. Il est cependant très onéreux ou trop complexe pour certaines applications, ce qui limite son utilisation.

Il a été mis au point un autre dispositif relativement plus simple, comme celui décrit dans le US-A-4 258 351. Celui-ci comporte une série de cellules photosensibles réparties dans le plan focal d'une lentille convergente. Chaque cellule est constituée d'une barrette, et chaque barrette est déterminée pour que sa longueur soit égale à la largeur de l'image de la voie formée par la lentille. Cette longueur suit donc la loi de la perspective de la voie.

Cette technique présente l'avantage d'une mise en oeuvre facile, mais présente également des inconvénients : il faut une réalisation pour chaque voie et on n'obtient qu'un seul signal par ligne transversale à la voie, ce qui rend l'interprétation de ces signaux très difficile.

D'autres dispositifs qui donnent de bons résultats ont été mis au point, qui sont constitués d'une caméra vidéo comportant une cible constituant un convertisseur optoélectronique d'une image optique, cette cible étant pilotée par un organe de traitement programmable.

Un tel dispositif est par exemple décrit dans le FR-A-2 679 682 qui donne un exemple de mise en oeuvre d'un procédé permettant de détecter un incident sur une portion de voie située dans un paysage lorsque cette portion de voie est apte à être parcourue par des objets.

Un tel dispositif présente des avantages par rapport aux dispositifs antérieurs. Outre le fait qu'il est constitué avec des éléments qui se trouvent couramment dans le commerce, il permet de mettre en mémoire les images de la portion de voie mise sous surveillance, ces images pouvant être ultérieurement utilisées pour, par exemple, connaître la cause d'un incident ou analogue survenu sur cette portion de voie.

En outre, pour mieux connaître la nature et les conséquences immédiates de l'incident, ce qui permet de mieux étudier sa cause, il est possible de modifier à volonté le champ de l'objectif de la caméra lorsqu'il est constitué d'un "zoom" et/ou de modifier l'orientation de l'axe optique de la caméra en montant celle-ci en coopération avec un organe d'orientation de façon que la direction de l'axe optique puisse être commandée en site et en azimut.

Ces possibilités offertes par les caméras vidéo actuelles sont très intéressantes pour les exploitants des voies de circulation, notamment automobile, mais compliquent considérablement la mise en oeuvre du procédé comme celui qui est donné dans le FR-A-2 679 682 pour détecter un incident par la technique connue des techniciens sous le terme de "DAI".

En effet, cette technique "DAI" de détection automatique d'incidents sur une portion de voie ne peut être mise en oeuvre que si l'image de la portion de voie formée sur la cible photosensible de la caméra est stable pendant plusieurs secondes, voire même quelques minutes, le temps nécessaire pour que l'organe de traitement puisse exécuter le programme de mise en oeuvre du procédé. Le procédé selon cette technique nécessite une phase de calibrage manuelle sur l'image stable. En général, la caméra est fixe et cette phase est accomplie au moment de la mise en service du dispositif. Par exemple, les opérations de maintenance sur la caméra nécessitent de vérifier, à chaque fois, le bon calibrage du capteur.

La mise en oeuvre de ce procédé n'est donc plus possible quand, par exemple, la direction de l'axe optique de la caméra change en site et/ou en azimut, et/ou quand le champ de l'objectif de la caméra varie, par exemple en "zoomant" sur une partie particulière de la portion de voie et/ou du paysage qui comporte cette portion de voie.

US-B1 6 727 938 décrit un système de désactivation de la détection pendant un mouvement de la caméra et en réactivant la détection lorsque la caméra cesse son mouvement.

La présente invention a donc pour but de mettre en oeuvre un procédé qui permet de détecter de façon automatique un incident survenant sur une portion de voie, par exemple par la technique "DAI" décrite dans le FR-A-2 679 682, même quand le champ de l'objectif de la caméra a été modifié par exemple en agissant sur le "zoom" et/ou quand la direction de l'axe optique de la caméra a été changée en site et/ou en azimut, et ce, sans imposer, par exemple, l'intervention manuelle de techniciens après chacune de ces modifications, tout en permettant d'utiliser les dispositifs pour la mise en oeuvre des procédés de l'art antérieur sans devoir ajouter des moyens matériels supplémentaires.

La présente invention a pour objet un procédé pour détecter un incident sur une portion de voie située dans un paysage lorsque ladite portion de voie est apte à être parcourue par des objets et que le procédé met en oeuvre une caméra vidéo comportant une cible constituant un convertisseur optoélectronique d'une image optique réelle du paysage, ladite cible étant pilotée par un organe de traitement programmable, le processus de détection des incidents n'étant apte à être effectué en réalisant une activation dudit organe de traitement programmable que lorsque l'image réelle du paysage focalisée sur la cible est fixe, caractérisé par le fait qu'il consiste :
- à détecter le début d'un déplacement de l'image réelle du paysage par rapport à la cible,
- à désactiver l'organe de traitement programmable dès le début du déplacement de l'image réelle du paysage par rapport à la cible,
- à détecter la fin du déplacement de l'image réelle du paysage par rapport à la cible, et
- à réactiver l'organe de traitement programmable à la fin du déplacement de l'image réelle du paysage par rapport à la cible pour effectuer le processus de détection d'incident.

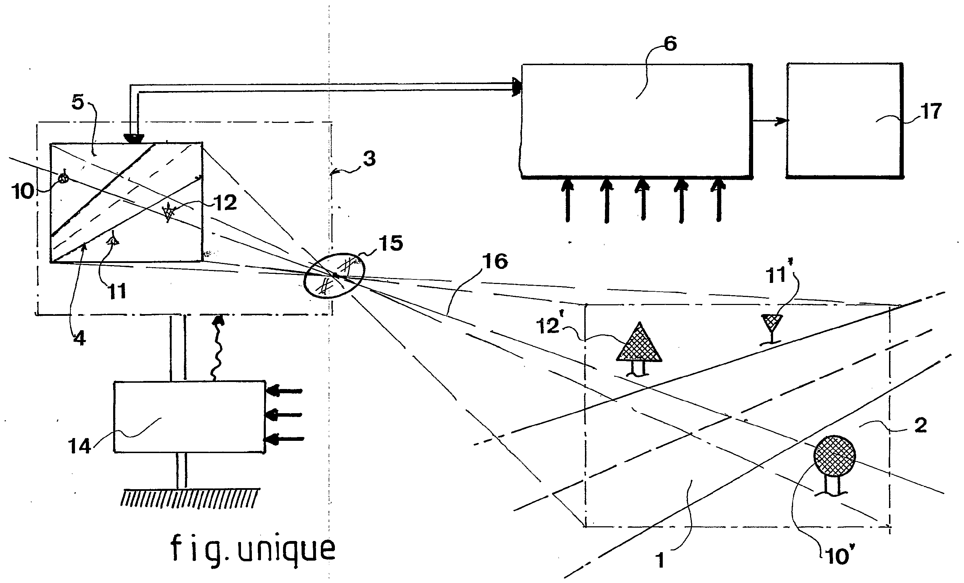

D'autres caractéristiques et avantages de l'invention apparaîtront au cours de la description suivante donnée en regard des dessins annexés à titre illustratif mais nullement limitatif, dans lesquels :
La figure unique représente le schéma de principe d'un mode de réalisation des moyens pour mettre en oeuvre le procédé selon l'invention et permettant en outre d'expliciter ce procédé.

La présente invention concerne un procédé pour détecter un incident sur une portion de voie 1 située dans un paysage 2 lorsque cette portion de voie est apte à être parcourue par des objets, de toute nature, notamment dans le cas ou la portion de voie est apte à être parcourue par des véhicules automobiles.

Ce procédé s'applique lorsque, pour sa mise en oeuvre, est utilisée une caméra vidéo 3 comportant une cible 4 constituant un convertisseur optoélectronique d'une image optique réelle 5 du paysage 2 et que, à cette caméra, sont associés des moyens 14 qui permettent de modifier à volonté le champ de l'objectif 15 de la caméra lorsqu'il est constitué d'un "zoom" et/ou de modifier l'orientation de l'axe optique 16 de la caméra de façon que la direction de cet axe optique puisse être commandée en site et en azimut. Ces derniers moyens 14 sont bien connus en eux-mêmes et ne seront donc pas plus amplement décrits ici dans l'unique souci de simplifier la présente description.

Il est précisé que, par paysage, on entend tous les éléments-de la scène, y compris la portion de voie, qui sont dans le champ de la caméra.

De plus, la cible est analysée, par un organe de traitement programmable 6, comme un microprocesseur ou analogue, auquel est éventuellement associée une mémoire permanente 17 comme un magnétoscope ou analogue, la détection des incidents sur la portion de voie 1 dans le paysage 2 ne pouvant être effectuée en activant l'organe de traitement programmable 6 que lorsque l'image réelle 5 du paysage focalisée sur la cible 4 est fixe.

Le procédé selon l'invention consiste donc à détecter le début d'un déplacement de l'image réelle 5 du paysage 2 par rapport à la cible 4, à désactiver l'organe de traitement programmable 6 dès le début du déplacement de l'image réelle 5 du paysage par rapport à la cible, puis à détecter la fin du déplacement de l'image réelle du paysage par rapport à la cible, et enfin à réactiver l'organe de traitement programmable à la fin du déplacement de l'image réelle 5 du paysage par rapport à la cible 4, pour effectuer le processus de détection d'incident sur la portion de voie 1.

Selon une première mise en oeuvre avantageuse du procédé, la détection du début et de la fin du déplacement de l'image réelle du paysage par rapport à la cible consiste à déterminer au moins un premier point-image 10, 11, 12, ... de cette image réelle 5 du paysage 2 qui correspond à un point fixe 10', 11', 12', ... de ce paysage, à élaborer un premier signal d'ordre quand ce premier point-image subit un changement de position sur la cible 4, puis à commander l'organe de traitement programmable 6 en fonction de ce premier signal d'ordre, c'est-à-dire, tout d'abord désactiver l'organe de traitement programmable dès le début du déplacement de l'image réelle, puis réactiver ce même organe de traitement programmable à la fin du déplacement de l'image réelle pour effectuer, selon la technique connue en elle-même, le processus de détection d'incident.

Selon une deuxième mise en oeuvre avantageuse du procédé, la détection du début et de la fin du déplacement de l'image réelle 5 du paysage 2 par rapport à la cible consiste à déterminer au moins deux deuxième et troisième points-images 10, 11, 12, ... de l'image réelle 5 du paysage 2 qui correspondent respectivement à deux points fixes 10', 11', 12', ... de ce paysage, à élaborer un deuxième signal d'ordre quand la distance séparant ces deuxième et troisième points-images subit une variation, et ensuite à commander l'organe de traitement programmable 6 en fonction du deuxième signal d'ordre; c'est-à-dire, tout d'abord désactiver l'organe de traitement programmable dès le début du déplacement de l'image réelle, puis réactiver ce même organe de traitement programmable à la fin du déplacement de l'image réelle pour effectuer, selon la technique connue en elle-même, le processus de détection d'incident.

Dans une troisième mise en oeuvre avantageuse du procédé qui sera certainement préférée aux deux précédentes, la détection du début et de la fin du déplacement de l'image réelle du paysage par rapport à la cible consiste tout d'abord à déterminer au moins deux quatrième et cinquième points-images 10, 11, 12, ... de l'image réelle 5 du paysage 2 qui correspondent respectivement à deux points fixes 10', 11', 12', ... du paysage, à élaborer un troisième signal d'ordre quand la distance séparant les quatrième et cinquième points-images subit une variation et quand au moins l'un des deux quatrième et cinquième points-images subit un changement de position sur la cible 4, et à commander l'organe de traitement programmable 6 en fonction du troisième signal d'ordre, c'est-à-dire, tout d'abord désactiver l'organe de traitement programmable dès le début du déplacement de l'image réelle, puis réactiver ce même organe de traitement programmable à la fin du déplacement de l'image réelle pour effectuer, selon la technique connue en elle-même, le processus de détection d'incident.

Il est précisé que les signaux d'ordre définis ci-avant passent, à titre d'exemple, d'un premier état à un second état quand est détecté le début du déplacement de l'image réelle 5, et du second état au premier état quand est détectée la fin du déplacement de cette même image réelle.

En fait, l'organe de traitement programmable 6 est désactivé pendant la période pendant laquelle le signal d'ordre est dans son second état.

Les points fixes 10', 11', 12', ... dans le paysage 2 peuvent être par exemple, dans le cas de la détection d'incidents sur une voie de circulation automobile ou analogue, des points sombres (ou particulièrement lumineux) de panneaux signalétiques, de lampadaires ou analogues, de portions de panneaux publicitaires, ou même des points particulièrement sombres (ou particulièrement lumineux) d'une végétation déterminée.

La détection du début et de la fin, soit du déplacement d'un point-image de l'image réelle 5 du paysage 2 par rapport à la cible, soit de la variation de distance entre deux points-images, peut aisément se faire par exemple au moyen de l'organe de traitement 6 piloté par un programme informatique adapté apte à mettre en oeuvre le procédé selon l'invention, l'élaboration d'un tel programme étant du domaine de l'homme du métier quand il connaît le procédé explicité ci-dessus.

Pour une mise en oeuvre plus aisée et donc préférentielle du procédé, la cible 4 est composée d'une pluralité de points photosensibles, ces points photosensibles étant aptes à délivrer des signaux en fonction de la quantité de rayonnement reçue sur leur surface photosensible. De plus, les surfaces de réception de ces points photosensibles ont avantageusement des dimensions sensiblement de même valeur. En fait, les caméras vidéo du commerce comportent généralement de telles cibles.

Comme mentionné ci-avant, la détection d'un incident sur la portion de voie 1 n'est apte à être effectuée en activant de l'organe de traitement programmable 6 que lorsque l'image réelle 5 du paysage 2 focalisée sur la cible 4 est fixe.

Lorsque l'organe de traitement programmable 6 est activé, il est apte à effectuer une détection des incidents sur la portion de voie suivant différents processus. Un exemple avantageux de l'un de ces processus de détection d'incidents, connu des techniciens sous la terminologie "DAI", est par exemple décrit et explicité dans le FR-A-2 679 682.

Ce processus de détection d'incidents consiste schématiquement à sélectionner un groupe de points photosensibles dans la pluralité de points photosensibles de la cible 4, ce groupe de points sélectionné correspondant à des points de la portion de voie 1 localisés sur une pluralité de lignes imaginaires principales se situant au niveau du plan de la portion de voie 1 et étant sensiblement parallèles à l'axe de la trajectoire sensiblement rectiligne suivant laquelle doivent normalement se déplacer les objets sur la portion de voie 1, et à analyser l'ensemble des signaux délivrés par les points photosensibles du groupe sélectionné.

Ce processus de détection d'un incident peut aussi consister à décomposer le groupe de points photosensibles sélectionné en une pluralité de sous-groupes de points photosensibles correspondant à des points de la portion de voie situés à l'intersection des lignes imaginaires principales et, respectivement, de lignes imaginaires secondaires sensiblement perpendiculaires - aux lignes imaginaires principales, et à associer à chaque point photosensible d'un sous-groupe un coefficient multiplicateur de la valeur du signal émis par ce point, ce coefficient étant fonction de la probabilité de passage préférentiel des objets sur le point de la portion de voie qui a pour image le point photosensible associé à ce coefficient.

L'analyse des signaux délivrés par les points photosensibles mentionnée ci-dessus peut consister à effectuer une moyenne des valeurs des signaux délivrés, à des instants donnés, par les points de chaque sous-groupe, puis à comparer, pour chaque sous-groupe, les moyennes ainsi obtenues, et à déduire, de cette comparaison, la présence éventuelle d'un incident sur la portion de voie.

Le procédé selon l'invention tel que décrit et défini ci-dessus s'explicite de la façon suivante.

Il est tout d'abord précisé qu'il est facile de définir l'adresse d'un point-image sur la cible d'une caméra vidéo, et ce, d'autant plus que cette cible est formée d'une pluralité de points photosensibles comme des pixels ou analogues.

Par une analyse de cette cible à l'aide d'un logiciel adapté qui permet de mettre en oeuvre le procédé selon l'invention, il est possible de contrôler automatiquement la position d'un point-image sur la cible. Si ce point-image est l'image d'un point fixe du paysage 2, quand la caméra effectue un déplacement en site et/ou en azimut, ce point-image va changer de position. En suivant les changements de position de ce point-image, il est donc possible de déterminer le début et la fin du déplacement de l'image réelle du paysage 2 par rapport à la cible, et de désactiver l'organe de traitement tant que la position de ce point-image n'est pas redevenue fixe.

Quand l'image redevient stable, c'est-à-dire quand le point-image est analysé comme fixe par rapport à la cible, l'organe de traitement 6 commande à nouveau le processus de détection d'incidents par le procédé du type "DAI" comme défini ci-avant.

De même, quand on agit sur le zoom en avant ou en arrière sur le paysage 2, l'image sur la cible va respectivement grandir ou diminuer, de même donc que la distance séparant deux points-images.

De la même façon que décrit ci-dessus, il est possible de déterminer le début et la fin de la commande du zoom et, pendant ce temps, de désactiver tout au moins en partie l'organe de traitement, la partie étant demeurée active recherchant par exemple la stabilité.

Quand l'image redevient stable pendant une certaine constante de temps déterminée par les techniciens, c'est-à-dire quand les deux points-images sont analysés comme restant à distance constante, leur adresse respective étant redevenue fixe, l'organe de traitement 6 commande à nouveau le processus de détection d'incidents par le procédé "DAI" comme défini ci-avant.

Le procédé décrit ci-dessus a été décrit avec un point-image pour déterminer un déplacement de la caméra en site et/ou en azimut, et deux points-images pour détecter un zoom avant ou un zoom arrière. Mais, dans l'application à la détection d'un incident sur une portion de voie de circulation automobile ou analogue, il sera avantageusement utilisé une plus grande quantité de points-images pour assurer de façon la plus certaine possible la détection automatique d'un déplacement de la caméra aussi bien en site qu'en azimut et/ou une action sur le zoom. En effet, il n'est pas impossible, par exemple, que la position d'un point-image ait été considérée comme fixe avant un déplacement et que, à la fin de ce déplacement, sa position ne puisse être considérée comme fixe, ce point-image appartenant à l'image d'un véhicule en mouvement sur la portion de voie 1.

Aussi pour lever cette indétermination, la détection du début et de la fin du déplacement de l'image réelle du paysage par rapport à la cible, consiste avantageusement à déterminer une pluralité de points-images de l'image réelle du paysage qui correspond à une pluralité de points fixes au début du déplacement de l'image réelle, à élaborer un quatrième signal d'ordre quand, dans cette pluralité de points-images, un nombre déterminé d'entre eux sont redevenus fixes à la fin du déplacement de l'image réelle, et à commander l'organe de traitement programmable en fonction de ce quatrième signal d'ordre, c'est-à-dire, tout d'abord désactiver l'organe de traitement programmable dès le début du déplacement de l'image réelle, puis réactiver ce même organe de traitement programmable à la fin du déplacement de l'image réelle pour effectuer, selon la technique connue en elle-même, le processus de détection d'incident.

Les hommes du métier sauront déterminer la quantité optimale de points-images à utiliser et, dans cette quantité optimale de points-images, le nombre de points-images stables à prendre en compte.

A la description faite ci-avant, il apparaît nettement que le procédé peut être mis en oeuvre sans l'intervention manuelle de techniciens après chaque changement d'orientation de l'axe optique de la caméra en site et/ou en azimut, et/ou chaque variation d'angle de champ de son objectif, tout en utilisant les mêmes dispositifs que pour la mise en oeuvre des procédés selon l'art antérieur, sans devoir ajouter des moyens matériels supplémentaires.

Il suffit, pour mettre en oeuvre le procédé selon la présente invention, de charger de façon classique dans l'organe de traitement programmable un logiciel adapté à ce procédé, en sachant que l'élaboration de ce logiciel est du domaine de l'homme du métier comme mentionné auparavant.

## Revendications

1. Procédé pour réaliser à l'aide d'un organe de traitement programmable (6) une détection automatique d'incident sur une portion de voie (1) dans un paysage (2) en utilisant une caméra vidéo (3) comportant une cible (4) constituant un convertisseur optoélectronique d'une image optique réelle du paysage, ladite cible étant pilotée par l'organe de traitement programmable (6), le procédé étant **caractérisé par le fait qu'**il consiste :
- à détecter le début d'un déplacement d'au moins un point choisi dans l'image réelle du paysage par rapport à la cible,
- à désactiver la détection automatique d'incident dès le début du déplacement du au moins un point choisi dans l'image réelle du paysage par rapport a la cible,
- à détecter la fin du déplacement du au moins un point choisi correspondant à un point fixe de ce paysage dans l'image réelle du paysage par rapport à la cible, et
- à réactiver la détection automatique d'incident si l'image est restée stable pendant une période de temps démarrant à la fin du déplacement du au moins un point choisi dans l'image réelle du paysage par rapport à la cible et dont la durée est égale à une constante de temps prédéfinie,
- réaliser la détection automatique d'incident.

2. Procédé selon la revendication 1, **caractérisé par le fait que** la détection du début et de la fin du déplacement du au moins un point choisi dans l'image réelle du paysage par rapport à la cible consiste :
- à déterminer au moins un premier point-image de ladite image réelle du paysage qui correspond à un point fixe dudit paysage,
- à élaborer un premier signal d'ordre quand ledit premier point-image subit un changement de position sur ladite cible, et
- à commander ledit organe de traitement programmable en fonction dudit premier signal d'ordre.

3. Procédé selon la revendication 1, **caractérisé par le fait que** la détection du début et de la fin du déplacement du au moins un point choisi dans l'image réelle du paysage par rapport à la cible consiste :
- à déterminer au moins deux deuxième et troisième points-images de ladite image réelle du paysage qui correspondent respectivement à deux points fixes dudit paysage,
- à élaborer un deuxième signal d'ordre quand la distance séparant lesdits deuxième et troisième points-images varie, et
- à commander ledit organe de traitement programmable en fonction du deuxième signal d'ordre.

4. Procédé selon la revendication 1, **caractérisé par le fait que** la détection du début et de la fin du déplacement du au moins un point choisi dans l'image réelle du paysage par rapport à la cible consiste :
- à déterminer au moins deux quatrième et cinquième points-images de ladite image réelle du paysage qui correspondent respectivement à deux points fixes dudit paysage,
- à élaborer un troisième signal d'ordre quand la distance séparant les quatrième et cinquième points-images varie et quand au moins l'un des deux quatrième et cinquième points-images subit un changement de position sur ladite cible, et
- à commander ledit organe de traitement programmable en fonction du troisième signal d'ordre.

5. Procédé selon l'une des revendications précédentes, **caractérisé par le fait qu'**il consiste à décomposer ladite cible en une pluralité de points photosensibles, lesdits points photosensibles étant aptes à délivrer des signaux en fonction de la quantité de rayonnement reçue sur leur surface photosensible.

6. Procédé selon la revendication 5, **caractérisé par le fait que** le processus de détection d'un incident sur ladite portion de voie lorsqu'elle est apte à être parcourue par des objets suivant son axe et suivant une trajectoire sensiblement imposée, consiste :
- à sélectionner un groupe de points photosensibles dans ladite pluralité de points photosensibles de la cible, ce groupe de points sélectionné correspondant à des points de ladite portion de voie localisés sur une pluralité de lignes imaginaires principales, lesdites lignes imaginaires principales se situant au niveau du plan de ladite portion de voie et étant toutes sensiblement parallèles à l'axe de ladite trajectoire, et
- à analyser l'ensemble des signaux délivrés par les points photosensibles dudit groupe sélectionné.

7. Procédé selon la revendication 6, **caractérisé par le fait que** le processus de détection consiste en outre :
- à décomposer ledit groupe de points photosensibles sélectionné en une pluralité de sous-groupes de points photosensibles correspondant à des points de la portion de voie situés à l'intersection desdites lignes imaginaires principales et, respectivement, de lignes imaginaires secondaires sensiblement perpendiculaires aux lignes imaginaires principales, et
- à associer à chaque point photosensible d'un sous-groupe un coefficient multiplicateur de la valeur du signal émis par ce point, ce coefficient étant fonction de la probabilité de passage préférentiel des objets sur le point de la portion de voie qui a pour image le point photosensible associé à ce coefficient.

8. Procédé selon la revendication 7, **caractérisé par le fait que** les surfaces photosensibles de réception desdits points photosensibles ont des dimensions sensiblement de même valeur.

9. Procédé selon la revendication 8, **caractérisé par le fait que** ladite analyse consiste :
- à effectuer une moyenne des valeurs des signaux délivrés, à des instants donnés, par les points de chaque sous-groupe,
- à comparer, pour chaque sous-groupe, les moyennes ainsi obtenues, et
- à déduire, de cette comparaison, la présence éventuelle d'un incident sur ladite portion de voie.

10. Procédé selon l'une des revendications 1 à 9, **caractérisé par le fait que** la détection du début et de la fin du déplacement du au moins un point choisi dans l'image réelle du paysage par rapport a la cible consiste :
- à déterminer une pluralité de points-images de ladite image réelle du paysage qui correspond à une pluralité de points fixes au début du déplacement de l'image réelle,
- à élaborer un quatrième signal d'ordre quand, dans ladite pluralité de points-images, un nombre déterminé d'entre eux sont redevenus fixes à la fin du déplacement de l'image réelle, et
- à commander ledit organe de traitement programmable en fonction dudit quatrième signal d'ordre.

## Patentansprüche

1. Verfahren zum Durchführen, mit Hilfe eines programmierbaren Bearbeitungsorgans (6), einer automatischen Zwischenfallerkennung auf einem Straßenabschnitt (1) in einer Landschaft (2), durch Verwenden einer Videokamera (3), welche ein Ziel (4) beinhaltet, welches einen optoelektronischen Umwandler eines tatsächlichen optischen Bildes der Landschaft bildet, wobei das Ziel durch das programmierbare Bearbeitungsorgan (6) gesteuert wird, wobei das Verfahren **dadurch gekennzeichnet ist, dass** es aus folgenden Schritten besteht:
- Erkennen des Beginns einer Bewegung von mindestens einem gewählten Punkt in dem tatsächlichen Bild der Landschaft in Bezug auf das Ziel,
- Deaktivieren der automatischen Zwischenfallerkennung gleich zu Beginn der Bewegung des mindestens einen gewählten Punktes in dem tatsächlichen Bild der Landschaft in Bezug auf das Ziel,
- Erkennen des Endes der Bewegung des mindestens einen gewählten Punktes, welcher einem Fixpunkt im tatsächlichen Bild der Landschaft in Bezug auf das Ziel entspricht, und
- Reaktivieren der automatischen Zwischenfallerkennung, wenn das Bild über einen Zeitraum stabil geblieben ist, welcher mit dem Ende der Bewegung des mindestens einen gewählten Punktes in dem tatsächlichen Bild der Landschaft in Bezug auf das Ziel beginnt, und dessen Dauer einer vorbestimmten Zeitkonstante entspricht,
- Durchführen der automatischen Zwischenfallerkennung.

2. Verfahren nach Anspruch 1, **dadurch gekennzeichnet, dass** die Erkennung des Beginns und des Endes der Bewegung des mindestens einen gewählten Punktes in dem tatsächlichen Bild der Landschaft in Bezug auf das Ziel in folgenden Schritten besteht:
- Bestimmen mindestens eines ersten Bildpunktes des tatsächlichen Bildes der Landschaft, welcher einem Fixpunkt der Landschaft entspricht,
- Erzeugen eines ersten Befehlssignals, wenn der erste Bildpunkt eine Positionsänderung auf dem Ziel durchmacht, und
- Steuern des programmierbaren Bearbeitungsorgans abhängig vom ersten Befehls signal.

3. Verfahren nach Anspruch 1, **dadurch gekennzeichnet, dass** die Erkennung des Beginns und des Endes der Bewegung des mindestens einen gewählten Punktes in dem tatsächlichen Bild der Landschaft in Bezug auf das Ziel in folgenden Schritten besteht:
- Bestimmen mindestens eines zweiten und eines dritten Bildpunktes des tatsächlichen Bildes der Landschaft, welche jeweils zwei Fixpunkten der Landschaft entsprechen,
- Erzeugen eines zweiten Befehlssignals, wenn die Entfernung zwischen dem zweiten und dem dritten Bildpunkt sich ändert, und
- Steuern des programmierbaren Bearbeitungsorgans abhängig vom zweiten Befehls signal.

4. Verfahren nach Anspruch 1, **dadurch gekennzeichnet, dass** die Erkennung des Beginns und des Endes der Bewegung des mindestens einen gewählten Punktes in dem tatsächlichen Bild der Landschaft in Bezug auf das Ziel in folgenden Schritten besteht:
- Bestimmen mindestens eines vierten und eines fünften Bildpunktes des tatsächlichen Bildes der Landschaft, welche jeweils zwei Fixpunkten der Landschaft entsprechen,
- Erzeugen eines dritten Befehlssignals, wenn die Entfernung zwischen dem vierten und dem fünften Bildpunkt sich ändert und wenn mindestens einer des vierten und des fünften Bildpunktes eine Positionsänderung auf dem Ziel durchmacht, und
- Steuern des programmierbaren Bearbeitungsorgans abhängig vom dritten Befehls signal.

5. Verfahren nach einem der vorhergehenden Ansprüche, **dadurch gekennzeichnet, dass** es darin besteht, das Ziel in eine Vielzahl von lichtempfindlichen Punkten aufzugliedern, wobei die lichtempfindlichen Punkte in der Lage sind, Signale abhängig von der Menge an auf ihrer lichtempfindlichen Oberfläche empfangener Strahlung abzugeben.

6. Verfahren nach Anspruch 5, **dadurch gekennzeichnet, dass** das Erkennungsverfahren eines Zwischenfalls auf dem Straßenabschnitt, wenn dieser in der Lage ist, durch Objekte entlang seiner Achse und entsprechend einer im Wesentlichen vorgegebenen Bahn durchfahren zu werden, in folgenden Schritten besteht:
- Wählen einer Gruppe lichtempfindlicher Punkte in der Vielzahl von lichtempfindlichen Punkten des Ziels, wobei diese gewählte Gruppe von Punkten Punkten des Straßenabschnittes entspricht, welche auf einer Vielzahl von imaginären Hauptlinien positioniert sind, wobei die imaginären Hauptlinien sich auf Höhe der Ebene des Straßenabschnittes befinden, und sie alle im Wesentlichen Parallel zur Achse der Bahn sind, und
- Analysieren sämtlicher durch die lichtempfindlichen Punkte der gewählten Gruppe abgegebenen Signale.

7. Verfahren nach Anspruch 6, **dadurch gekennzeichnet, dass** das Erkennungsverfahren zudem in folgenden Schritten besteht:
- Aufgliedern der Gruppe von lichtempfindlichen Punkten in eine Vielzahl von Untergruppen von lichtempfindlichen Punkten, welche Punkten des Straßenabschnittes entsprechen, welche sich am Schnittpunkt der imaginären Hauptlinien und jeweils mit imaginären sekundären Linien befinden, welche im Wesentlichen rechtwinklig zu den imaginären Hauptlinien sind, und
- Verbinden, mit jedem lichtempfindlichen Punkt einer Untergruppe, eines Multiplikationsfaktors des Wertes des durch diesen Punkt emittierten Signals, wobei dieser Faktor von der Wahrscheinlichkeit der präferenziellen Durchfahrt der Objekte an demjenigen Punkt des Straßenabschnittes abhängt, dessen Bild der mit diesem Faktor verbundene lichtempfindliche Punkt ist.

8. Verfahren nach Anspruch 7, **dadurch gekennzeichnet, dass** die lichtempfindlichen Empfangsoberflächen der lichtempfindlichen Punkte Abmessungen von im Wesentlichen gleichem Wert besitzen.

9. Verfahren nach Anspruch 8, **dadurch gekennzeichnet, dass** die Analyse in folgenden Schritten besteht:
- Bilden eines Mittelwertes der Werte der zu gegebenen Zeitpunkten durch die Punkte einer jeden Untergruppe abgegebenen Signale,
- Vergleichen, für jede Untergruppe, der solchermaßen erzielten Mittelwerte, und
- Ableiten, aus diesem Vergleich, des eventuellen Vorliegens eines Zwischenfalls auf dem Straßenabschnitt.

10. Verfahren nach einem der Ansprüche 1 bis 9, **dadurch gekennzeichnet, dass** die Erkennung des Beginns und des Endes der Bewegung des mindestens einen gewählten Punktes in dem tatsächlichen Bild der Landschaft in Bezug auf das Ziel in folgenden Schritten besteht:
- Bestimmen einer Vielzahl von Bildpunkten des tatsächlichen Bildes der Landschaft, welche einer Vielzahl von Fixpunkten zu Beginn der Bewegung des tatsächlichen Bildes entspricht,
- Erzeugen eines vierten Befehlssignals, wenn in der Vielzahl von Bildpunkten eine bestimmte Anzahl darunter nach dem Ende der Bewegung des tatsächlichen Bildes wieder fix geworden sind, und
- Steuern des programmierbaren Bearbeitungsorgans abhängig vom vierten Befehls signal.

## Claims

1. A method of automatically detecting, by utilizing a programmable processor member (6), an incident on a route portion (1) in a scene (2) using a video camera (3) comprising a target (4) constituting an optoelectronic converter of a real optical image of the scene, said target being controlled by the programmable processor member (6), said method being **characterized in that** it consists:
- in detecting the beginning of movement of at least a point selected in the real image of the scene relative to the target,
- in deactivating automatic detection of an incident upon the beginning of the movement of the at least one point selected in the real image of the scene relative to the target,
- in detecting the end of movement of the at least one selected point corresponding to a fixed point of the scene in the real image of the scene relative to the target, and
- in reactivating automatic detection of an incident if the image has remained stable during a time period starting at the end of movement of the at least one point selected in the real image of the scene relative to the target and the duration of which is equal to a predefined time constant,
- in implementing the automatic detection of an incident.

2. The method according to claim 1, **characterized in that** the detection of the beginning and ending of movement of the at least one point selected in the real image of the scene relative to the target consists:
- in determining at least a first image point of said real image of the scene that corresponds to a fixed point of said scene,
- in generating a first command signal when said first image point is subject to a change of position on said target, and
- in controlling said programmable process member as a function of said first command signal.

3. The method according to claim 1, **characterized in that** the detection of the beginning and ending of movement of the at least one point selected in the real image of the scene relative to the target consists:
- in determining at least a second and a third image point of said real image of the scene corresponding respectively to two stationary points of said scene,
- in generating a second command signal when the distance between said second and third image points varies, and
- in controlling the programmable processor member as a function of the second command signal.

4. The method according to claim 1, **characterized in that** the detection of the beginning and ending of movement of the at least one point selected in the real image of the scene relative to the target consists:
- in determining at least a fourth and a fifth image point of said real image of the scene corresponding respectively to two stationary points of said scene,
- in generating a third command signal when the distance between said fourth and fifth image points varies, and when at least one of the fourth and fifth image points is subjected to a change of position on said target, and
- in controlling the programmable processor member as a function of the third command signal.

5. The method according to one of the preceding claims, **characterized in that** it consists in subdividing said target into a plurality of photosensitive points, said photosensitive points being suitable for delivering signals as a function of the quantity of radiation received on their photosensitive surface.

6. The method according to claim 5, **characterized in that** the process for detecting an incident on said route portion when it is suitable for having objects traveling thereon along its axis and following a path that is substantially imposed, consists:
- in selecting a group of photosensitive points in said plurality of photosensitive points of the target, the selected group of points corresponding to points of said route portion located on a plurality of main imaginary lines, said main imaginary lines being situated at the plane of said route portion and all being substantially parallel to the axis of said path, and
- in analysing the set of signals delivered by the photosensitive points of said selected group.

7. The method according to claim 6, **characterized in that** the detection process further consists:
- in subdividing said selected group of photosensitive points into a plurality of subgroups of photosensitive points corresponding to points on the route portion situated at the intersection between said main imaginary lines and respective secondary imaginary lines that are substantially perpendicular to the main imaginary lines, and
- in associating each photosensitive point of a subgroup with a weighting coefficient for multiplying the value of the signal emitted by said point, the weighting coefficient being a function of the probability of preferential passage of objects over the point of the route portion whose image is the photosensitive point associated with said weighting coefficient.

8. The method according to claim 7, **characterized in that** the photosensitive receive surfaces of said photosensitive points are of substantially the same dimensions.

9. The method according to claim 8, **characterized in that** said analysis consists:
- in averaging the values of the signals delivered by the points of each subgroup at given instants,
- in comparing the averages as obtained in this way for each subgroup, and
- in deducing from said comparison the presence, if any, of an incident on said portion of route.

10. The method according to one of claims 1 to 9, **characterized in that** the detection of the beginning and ending of movement of the at least one point selected in the real image of the scene relative to the target consists:
- in determining a plurality of image points of said real image of the scene corresponding to a plurality of fixed points at the beginning of movement of the real image,
- in generating a fourth command signal when some determined number of said plurality of image points have become stationary again at the end of movement of the real image, and
- in controlling the programmable processor member as a function of said fourth command signal.
